# EUROPÄISCHE PATENTSCHRIFT

(11) **EP 0 843 767 B1**
(45) Veröffentlichungstag und Bekanntmachung des Hinweises auf die Patenterteilung: **21.04.1999**
(21) Anmeldenummer: 96929233.3
(22) Anmeldetag: 09.08.1996
(51) Int. Cl.: E05F 15/10, B60J 7/057, F16H 27/08

(54) **MOTOR-GETRIEBE-ANTRIEBSEINHEIT FÜR EIN ZWISCHEN ENDSTELLUNGEN VERSTELLBARES TEIL**
DRIVE UNIT WITH MOTOR AND TRANSMISSION FOR A COMPONENT MOVABLE BETWEEN END POSITIONS
UNITE D'ENTRAINEMENT A MOTEUR ET TRANSMISSION POUR UN COMPOSANT POUVANT SE DEPLACER ENTRE DEUX POSITIONS EXTREMES

(30) Priorität: 11.08.1995 EP 95112678
(43) Veröffentlichungstag der Anmeldung: 27.05.1998
(73) Patentinhaber: SIEMENS AKTIENGESELLSCHAFT, 80333 München (DE)
(72) Erfinder: GLEIXNER, Ronald, D-97199 Ochsenfurt (DE); LANDWEHR, Peter, D-97246 Eibelstadt (DE); LANG, Sabine, D-97076 Würzburg (DE)
(86) Internationale Anmeldenummer: EP9603540
(87) Internationale Veröffentlichungsnummer: WO9707311

(56) Entgegenhaltungen:
- DE-C- 820 357
- DE-C- 4 403 574
- FR-A- 2 664 643

## Beschreibung

Die Erfindung bezieht sich auf eine Motor-Getriebe-Antriebseinheit für ein zwischen Endstellungen verstellbares Teil gemäß Patentanspruch 1.

Motor-Getriebe-Antriebseinheiten der vorgenannten Art müssen mit einer Endstellungserkennung versehen sein, durch die bei definierten Hubstellungen des verstellbaren Teils, z.B. bei Erreichen der Schließ- bzw. der Öffnungsendstellung des Schiebedaches eines Kraftfahrzeuges, der motorische Antrieb ein- bzw.abgeschaltet wird; dazu muß der gesamte Hubweg, der u.a. durch eine Vielzahl von Umdrehungen der Abtriebswelle bzw. der Antriebswelle repräsentiert ist, zur eindeutigen Erkennbarkeit in maximal eine Umdrehung eines Schaltrades zur Betatigung eines Motor-Schalters umgesetzt, d.h. reduziert werden.

Durch die DE-C1-42 09 652 ist eine Antriebsvorrichtung für ein zwischen Endstellungen verstellbares Teil eines Fahrzeugs mit einem Elektromotor bekannt, der über ein Untersetzungsgetriebe mit einem auf einer Abtriebswelle sitzenden Antriebsritzel verbunden ist, das seinerseits mit dem verstellbaren Teil in Antriebsverbindung steht. Zu der Antriebsvorrichtung gehört ferner eine den Motor steuernde Schalteinrichtung zum Stillsetzen des Motors in mindestens einer vorbestimmten Stellung des verstellbaren Teils. Zum Betätigen der Schalteinrichtung ist ein Schaltrad vorgesehen, das beim Verstellen des Teils zwischen seinen Endstellungen über ein Exzenterzahnrädergetriebe zu einer Drehbewegung von weniger als 360° veranlaßt wird. Das Exzenterzahnrädergetriebe weist ein innenverzahntes Außenrad und ein damit in Kämmeingriff stehendes außenverzahntes Innenrad auf. Das Innenrad steht fest. Das Außenrad ist für eine Taumelbewegung mit Bezug auf die Achse des Innenrades gelagert und es bildet zugleich das mit der Schalteinrichtung zusammenwirkende Schaltrad.

Bei Motor-Getriebe-Antriebseinheiten der vorgenannten Art ist oft zusätzlich die Möglichkeit einer handbetriebenen Notbetatigung gewünscht, die im letztgenannten Fall jedoch nicht vorgesehen ist.

Ein handkurbelbetreibbarer Notantrieb einer ansonsten betriebsmäßig mittels eines Elektromotors antreibbaren Antriebseinheit, insbesondere für Schiebedächer in Kraftfahrzeugen, wird z.B. in der EP-A2-0 410 487 beschrieben. In diesem bekannten Fall erfolgt eine lösbare Kupplungsverbindung zwischen dem Getriebe einerseits und einer Antriebswelle der Antriebseinheit andererseits über eine formschlüssige Drehmitnahme dadurch, daß die Außenfläche des Notbetatigungsteils neben einem zylindrischen einen axial verlaufenden außensechskantförmigen Abschnitt aufweist, der in einer entsprechenden sechskantförmigen axialen Ausnehmung des Abtriebszahnrads und der Abtriebswelle derart formschlüssig aufgenommen wird, daß einerseits im Normalbetrieb ein Formschluß zwischen dem Abtriebszahnrad und der Abtriebswelle über das Notbetatigungsteil gegebenen und im Fall einer Notbetatigung durch axiales Vordrücken des Notbetatigungsteils gegen eine vorgespannte Schraubendruckfeder der Formschluß des Notbetatigungsteils zu dem Abtriebszahnrad aufgehoben ist. Eine Endstellungserkennung ist im letztgenannten Fall nicht vorgesehen.

Vorliegender Erfindung liegt daher die Aufgabe zugrunde, eine einfach zu fertigende, vorteilhaft zu einer vorhandenen Motor-Getriebe-Antriebseinheit nachrüstbare Endstellungserkennung zu schaffen, die bei vorhandener Notbetatigung auch bei bzw. nach deren zwischenzeitlichem Einsatz die definierten Endstellungen weiter gewährleistet, so daß eine Aktivierung des Normalbetriebes mit motorischer Verstellung nach einer Notbetatigung ohne Neujustierung wieder voll einsatzbereit ist.

Die Lösung der vorgenannten Aufgabe gelingt erfindungsgemaß durch die Lehre gemäß Anspruch 1; vorteilhafte Ausgestaltungen der Erfindung sind jeweils Gegenstand der Unteransprüche.

Die in einfacher Weise außen, insbesondere am antriebswellenseitigen Ende, an eine Antriebseinheit mit integrierter Notbetätigung auch nachträglich anbaubare, einfach von händischer Notbetätigung auf motorische Normalbetätigung ohne Notwendigkeit einer Nachjustage umstellbare Endstellungserkennung erlaubt aufgrund der taumelfreien Zuordnung von drehachsenbezogener Lagerung sowohl des Mitnehmers als auch des Gegenmitnehmers eine aufwandsarme sowie einfach zusammenbaubare und trotzdem funktionell sichere Weguntersetzung des gesamten Hubweges des von der Abtriebswelle angetriebenen verstellbaren Teils auf maximal eine Umdrehung des in zweckmäßiger Weise als Schaltrad ausgebildeten Gegenmitnehmers, wobei im Falle einer vorhandenen Notbetätigung durch die Entkupplungsbewegung der Antriebswelle von dem Getriebe der Mitnehmer lediglich relativ zu dem Gegenmitnehmer axial mitverschoben wird und bei entsprechener axialer Hubhöhe auf einfache Weise in Mitnahmekontakt zu dem Gegenmitnehmer bleibt.

Durch die erfindungsgemäße zweite Kupplungsverbindung zwischen dem Getriebe und der Antriebswelle in Form einer Kegelradverzahnung zwischen der Abtriebswelle einerseits und der Antriebswelle andererseits wird bei für eine hinreichende Drehmomentenübertragung gewährleistetem Überdeckungsgrad nur ein axialer Hub zur Lösung der zweiten Kupplungsverbindung benötigt, der der axialen Hohe der Zahnflanken der Kegelradverzahnung entspricht und somit um ein Vielfaches kleiner gehalten werden kann als der im bekannten erstgenannten Fall notwendige Hub, der durch die axiale Erstreckung des außensechskantförmigen Abschnittes bestimmt ist. Der dadurch gewonnene axiale Bauraum steht dann zum axialen Anbau einer Endstellungserkennung zur Verfügung, so daß insgesamt die Bauhöhe einer Antriebseinheit mit Endstellungserkennung und Notbetätigung nicht vergrößert werden muß; eine geringe Bauhöhe ist Voraussetzung von derartigen Antriebseinheiten insbesondere bei Einsatz zum Antrieb von Schiebedächern bzw. Fenstern in Kraftfahrzeugen.

Die Erfindung sowie weitere vorteilhafte Ausgestaltungen der Erfindung gemaß Merkmalen der Unteransprüche werden im folgenden anhand schematisch dargestellter Ausführungsbeispiele in der Zeichnung näher erläutert; darin zeigen:
- FIG 1: in einem axialen Schnittbild eine erste Ausführung der erfindungsgewäßen Motor-Getriebe-Antriebseinheit im Normalbetrieb;
- FIG 2: die Anordnung gemäß FIG 1 im Schnittverlauf II-II;
- FIG 3: die Motor-Getriebe-Antriebseinheit gemaß FIG 1 im Notbetätigungsbetrieb;
- FIG 4: eine weitere Ausgestaltung der Erfindung im Notbetätigungsbetrieb mit zusätzlich eingestecktem Notbetätigungswerkzeug in Form einer Handkurbel;
- FIG 5: die Anordnung gemäß FIG 4 im Schnittverlauf V-V, jedoch ohne eingesteckte Handkurbel;
- FIG 6: in einem axialen Schnittbild gemäß Schnittverlauf VI-VI in FIG 7 eine weitere Ausführung der erfindungsgemäßen Motor-Getriebe-Antriebseinheit mit einer zusätzlichen Endstellungserkennung;
- FIG 7: eine perspektivische axiale Draufsicht auf die Endstellungserkennung gemäß FIG 6.
- FIG 8: in einem axialen Schnittbild eine weitere Ausführung der erfindungsgemäßen Motor-Getriebe-Antriebseinheit mit einer Endstellungserkennung jedoch ohne Notbetätigung.

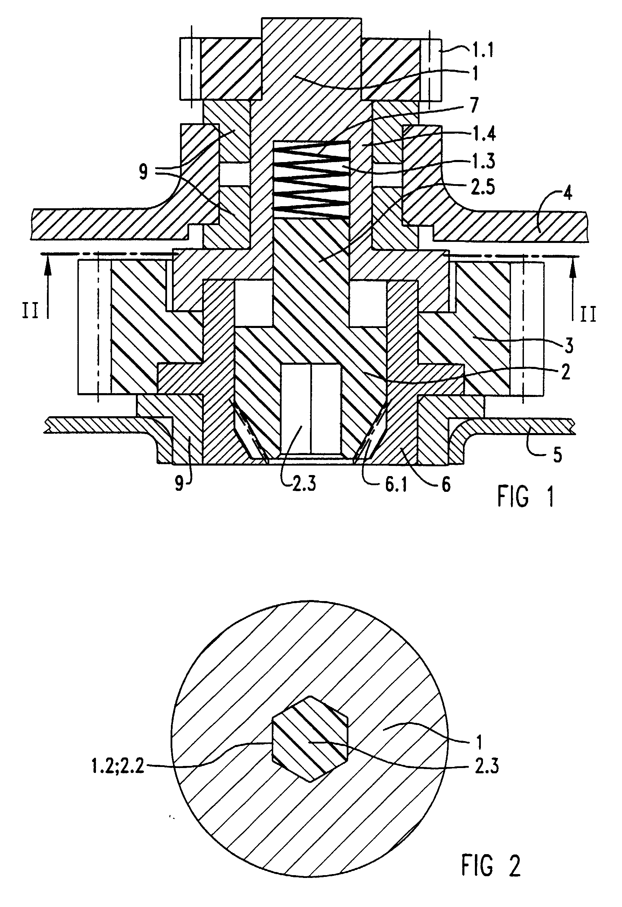

FIG 1-3 zeigen eine Motor-Getriebe-Antriebseinheit zum Antrieb eines Schiebedaches in einem Kraftfahrzeug mit einem metallenen Getriebegehäuse 4 und einem diesen verschließenden metallenen Getriebegehäusedeckel 5. Am bzw. im Getriebegehäuse 4 bzw. Getriebegehäusedeckel 5 sind als Haupt-Bauteile eine vorzugsweise metallene Abtriebswelle 1 mit ebenfalls einem metallenen Abtriebsritzel 1.1 und eine mit der Abtriebswelle 1 durch eine axial verschiebbare erste Kupplungsverbindung (1.2;2.2) in Drehmitnahme stehende Antriebswelle 2 sowie eine die Antriebswelle 2 im Normalbetrieb antreibendes, vorzugsweise aus Kunststoff gespritztes, Abtriebszahnrad 3 eines von einem hier nicht dargestellten Elektromotor angetriebenen Getriebes gelagert.

Als axial verschiebbare erste Kupplungsverbindung zwischen der Abtriebswelle 1 und der Antriebswelle 2 wird gemäß FIG 1,2 ein axial vorstehender, in eine Einstecköffnung 1.3 der Abtriebswelle 1 reichender Kupplungsstift 2.5 der Antriebswelle 2 von einer Kupplungs-Hülse 1.4 der Abtriebswelle 1 mit formschlüssiger Drehmitnahme umgriffen; dazu ist zwischen dem Kupplungsstift 2.5 und der Kupplungs-Hülse 1.4 - wie aus dem Schnittbild gemäß FIG 2 ersichtlich - jeweils ein Vielkant mit axial verlaufenden Vielkant-Flächen 1.2 bzw.2.2 in Form eines Sechskantes vorgesehen.

Als lösbare zweite Kupplungsverbindung zwischen dem Abtriebszahnrad 3 und der Antriebswelle 2 ist erfindungsgemäß eine Kegelradverzahnung mit schräg zur Achse der Antriebswelle 2 verlaufenden antriebswellenseitigen Zahnflanken 2.1 und korrespondierenden Zahnflanken 6.1 an einem gemäß FIG 1,2 mit dem Abtriebszahnrad 3, z.B. durch zahnartig ineinandergreifenden Formschluß, fest verbundenen Zwischenkupplungsstück 6 vorgesehen.

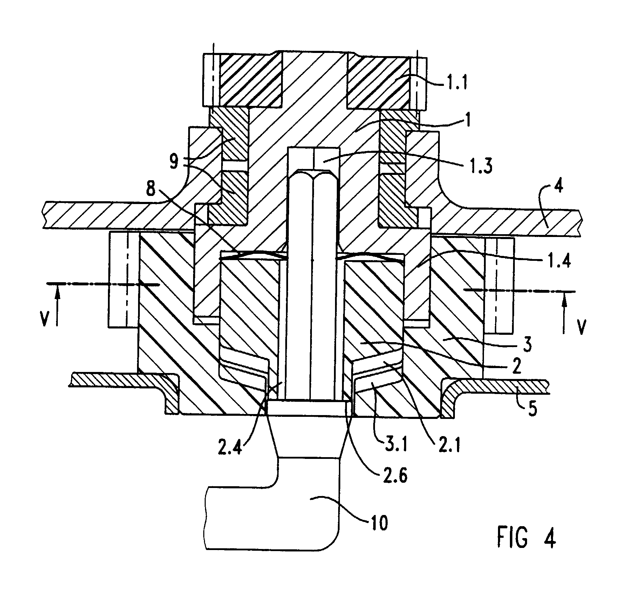

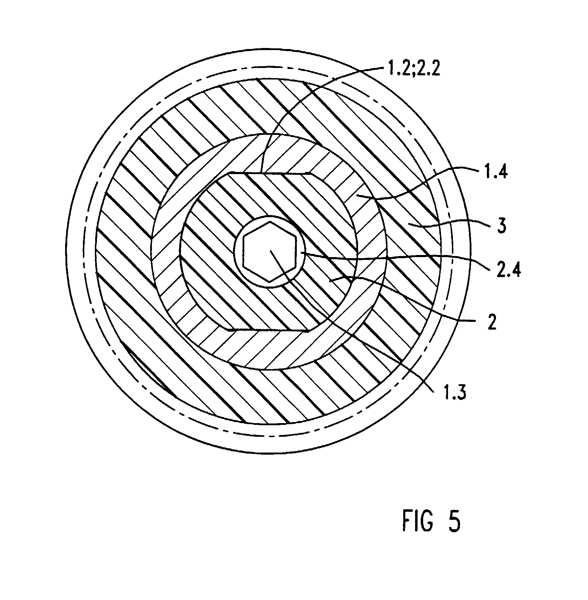

Gemäß dem Ausführungsbeispiel nach FIG 1,2 ist das Zwischenkupplungsstück 6 aus Metall gebildet und daher über ein Bundlager 9 im ebenfalls metallenen Getriebegehäusedeckel 5 gelagert. Beim Ausführungsbeispiel nach FIG 4,5 sind in vorteilhafter Weise unter Weglassung des Zwischenkupplungsstückes 6 das Abtriebszahnrad 3 des Getriebes als auch die Antriebswelle 2 als Kunststoff-Spritzgußteile hergestellt, wobei einerseits auf gesonderte Bundlager verzichtet und andererseits durch die damit mögliche radiale Erweiterung der Antriebswelle 2 der radiale Überdeckungsgrad der Zahnflanken vergrößert und dadurch deren axiale Hohe und in Folge davon der axiale Hub zur Lösung der zweiten Kupplungsverbindung in vorteilhafter Weise noch weiter verringert werden können; dementsprechend ist als bevorzugter Kegelwinkel bei einer Ausführung mit einem metallenen Kupplungszwischenstücks 6 gemäß FIG 1-3 vorzugsweise ein Kegelwinkel von ca. 60° und bei der Ausführung mit einer einstückigen, als Kunststoffspritzgußteil hergestellten, radial erweiterten Antriebswelle 2 mit direktem Antrieb durch das Abtriebszahnrad 3 gemäß FIG 4,5 vorzugsweise ein Kegelwinkel von bevorzugt ca. 150° vorgesehen.

Als axial verschiebbare erste Kupplungsverbindung 1.2;2.2 zwischen der Antriebswelle 2 und der Abtriebswelle 1 übergreift letztere bei dem weiteren Ausführungsbeispiel gemäß FIG 4,5 die Antriebswelle 2 mit einer Kupplungs-Hülse 1.4 außenrandseitig; zur formschlüssigen gegenseitigen Mitnahme sind wieder - wie aus dem Schnittbild gemäß FIG 5 ersichtlich - einander korrespondierende Vielkantflächen 1.2 bzw.2.2 am Innenumfang der Kupplungs-Hülse 1.4 der Abtriebswelle 1 bzw. am Außenumfang der Antriebswelle 2 vorgesehen.

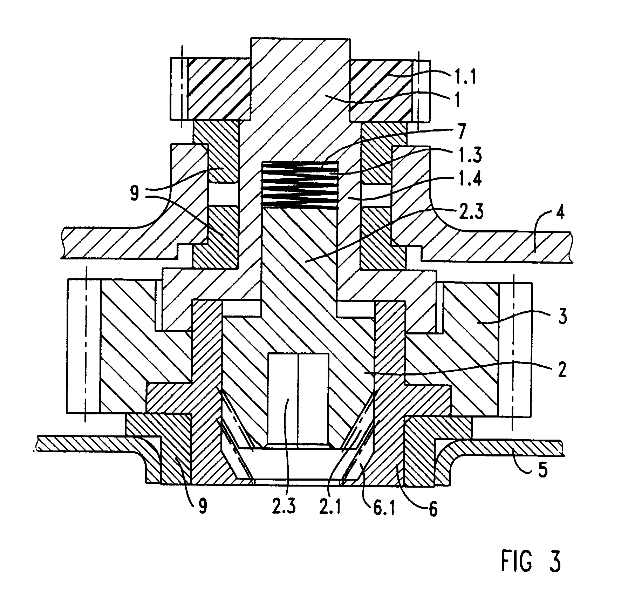

Im Falle einer Notbetätigung wird ein Notbetätigungswerkzeug, insbesondere eine in FIG 1,2 wegen der deutlicheren Darstellung der übrigen Bauteile nicht eingebrachte, jedoch in FIG 3 angedeutete Handkurbel 10 beim ersten Ausführungsbeispiel in die Einstecköffnung 2.3 der Antriebswelle 2 eingeführt und durch axiales Vordrücken die Antriebswelle 2 entgegen dem Druck einer Schraubenfeder 7 gemäß FIG 1,2 soweit axial angehoben, daß sich die Kupplung der Kegelradverzahnung löst. Die Einstecköffnung 2.3 der Antriebswelle 2 ist mit einem Innen-Vielkant versehen, derart daß durch Dreh-Betätigung der mit einem korrespondierenden Außen-Vielkant versehenen Handkurbel 10 die Antriebswelle 2 ohne eine Kupplungsverbindung zum Abtriebszahnrad 3 über die dauernd in Verbindung stehende axial verschiebliche erste Kupplungsverbindung 1.2;2.2 die Abtriebswelle 1 mit ihrem Abtriebsritzel 1.1 von Hand gedreht und damit das Schiebedach unabhängig von seinem motorischen Antrieb verstellt werden kann.

Da die über Bundlager 9 im Getriebegehäuse 4 gelagerte Abtriebswelle 1 üblicherweise in Metall ausgeführt ist, kann gemäß einer zweiten Ausgestaltung entsprechend FIG 4,5 die Drehmomentübertragung durch eine eingesteckte Handkurbel 10, insbesondere bei als Kunststoff-Spritzgußteil hergestellter Antriebswelle 2, dadurch sichergestellt bzw. vergrößert werden, daß die Antriebswelle 2 mit einer axial durchgehenden Durchstecköffnung 2.4 derart vorgesehen ist, daß das freie mit einem Vielkant versehene Ende der Handkurbel 10 durch die Durchstecköffnung 2.4 der Antriebswelle 2 mit lediglich axialem Anschlag 2.6 zu deren axialem Auskuppeln frei durch- und dann erst in Drehmitnahme formschlüssig in die Einstecköffnung 1.3 der Abtriebswelle 1 eingesteckt wird; zur gegenseitigen formschlüssigen Drehmitnahme sind das verlängerte freie Ende der Handkurbel 10 bzw. die Kupplungs-Hülse 1.4 der Einstecköffnung 1.3 der Abtriebswelle 1 wiederum mit korrespondierenden Vielkantflächen versehen. Durch die Wahl einer Federringscheibe 8, insbesondere einer Wellfeder, mit Mittelöffnung gemäß FIG 4 kann in vorteilhaftem Unterschied zu einer Schraubenfeder als axial verspannendem Federelement die Handkurbel 10 problemlos in die Einstecköffnung 1.3 der Abtriebswelle 1 gebracht und insbesondere die Bauhöhe des Federelementes wesentlich verringert werden.

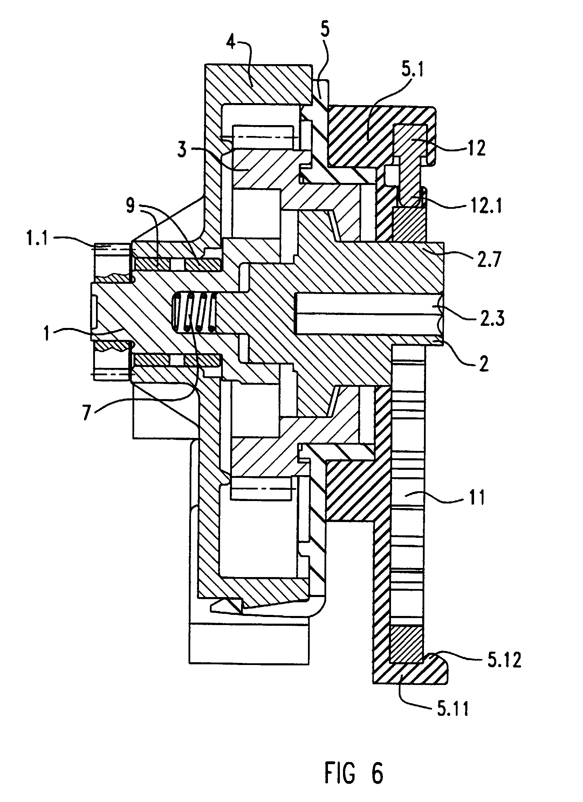

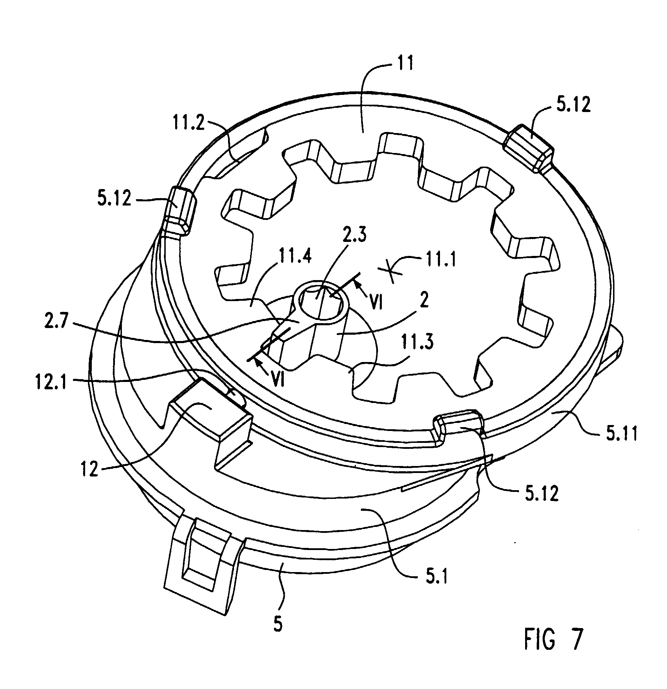

FIG 6;7 zeigen die erfindungsgemäße Endstellungserkennung in ihrer vorteilhaften Einsatzmöglichkeit in Verbindung mit einer in den Figuren 1-5 beschriebenen Notbetätigung, derart daß bei bzw. nach einer Verstellung durch eine Hand-Notbetätigung definierte, z.B. in einer Steuerung abgespeicherte, Positionen des verstellbaren Teils beibehalten werden und nach Beendigung des Notbetätigungsbetriebes mit anschließender Wiederaktivierung des motorischen Verstellantriebes dieser ohne Nachjustage, insbesondere ohne erneute Initiierung der Steuerdaten hinsichtlich der Endstellungen des verstellbaren Teils, wieder voll einsetzbar ist.

Dazu sind im wesentlichen an einem aus dem Getriebegehäusedeckel 5 ragenden Ende des mit der Einstecköffnung 2.3 für die Notbetätigung vorgesehenen Endes der Antriebswelle 2, vorzugsweise einstückig, ein Mitnehmer 2.7 in Form eines radial überstehenden Nockens und in einer, vorzugsweise zentrisch am Getriebegehäusedeckel 5 befestigten, Halterung 5.1 ein exzentrisch parallel zur Antriebswelle 2 drehbarer, von dem Mitnehmer 2.7 beaufschlagbarer Gegenmitnehmer 11 in Form eines Schaltrades mit Innenverzahnung vorgesehen.

Der Gegenmitnehmer 11 ist in der Halterung 5.1 derart um eine fiktive Achse 11.1 parallel zu der Antriebswelle 2 und zur Drehachse des Mitnehmers 2.7 drehbar geführt und mit Zähnen 11.3;11.4 usw. einer mit dem Mitnehmer 2.7 kämmenden Innenverzahnung versehen, daß der Mitnehmer 2.7 bei jeder Drehung zeitweise hinter einen Zahn einklinkt, diesen mitnimmt und dadurch den Gegenmitnehmer 11 insgesamt soweit dreht, daß sein Umfangswinkel zwischen zwei zu erkennenden Endstellungen des verstellbaren Teils nicht größer als 360°C ist.

Der Mitnehmer 2.7 weist in vorteilhafter Weise eine solche axiale Hubhöhe auf, daß er in beiden axialen Verschiebestellungen der Antriebswelle 2, d.h. sowohl im Normalbetrieb als auch im Notbetätigungsbetrieb mit dem Gegenmitnehmer 11 im Sinne der beschriebenen Einklinkmitnahme kammen kann.

Der Gegenmitnehmer 11 ist in fertigungstechnisch vorteilhafter Weise mit der vorzugsweise als Kunststoff-Spritzgußteil gefertigten Halterung 5.1 mit nach Art einer Eindrück-Schnappverbindung zusammenbaubar; die Halterung 5.1 weist einen axial vorstehenden, auch der drehbaren Führung des Gegenmitnehmers 11 dienenden, topfförmigen Rand 5.11 und an diesem Rand 5.11 Schnapphaken 5.12 auf.

In vorteilhafter Weise ist der Gegenmitnehmer 11 gleichzeitig als Schaltrad ausgebildet und dazu an seinem Außenrand mit einer Schaltkulisse 11.2 versehen, von der ein in der Halterung 5.1 aufgenommener, z.B. der Motorab- bzw. Motorzuschaltung dienender, Schalter 12 betätigt wird, wenn dessen durch eine Öffnung des topfförmigen Randes 5.11 reichender Schaltstöpsel 12.1 der Kulisse 11.2 gegenübersteht und von dieser betätigt wird. Die wahlweise Zuordnung einer Motorabschaltung bzw. einer Motorzuschaltung bei hier vorgesehenem, die Endstellungen markierendem einzigem Schalter 12 erfolgt durch eine hier nicht naher erläuterte Steueranordnung, insbesondere durch deren Software, z.B. in Abhängigkeit von einer vorherigen Schließbewegung oder vorherigen Öffnungsbewegung des zu verstellenden Teils.

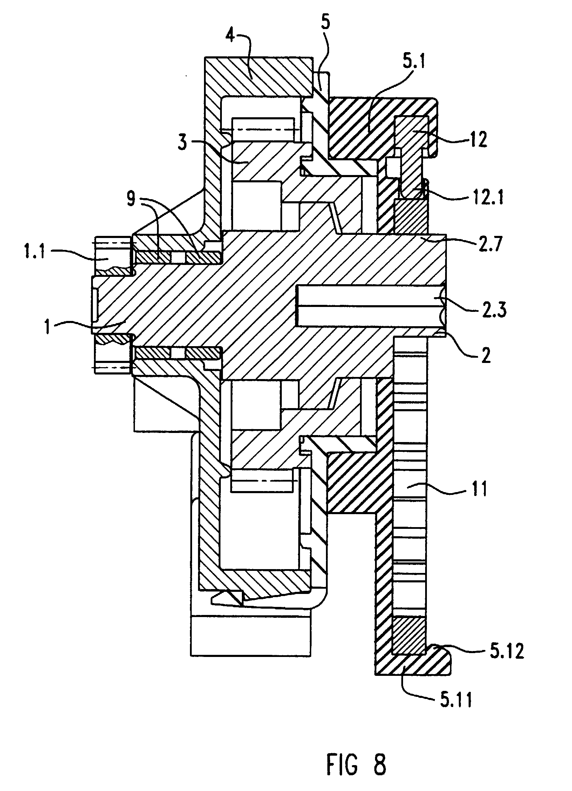

FIG 8 zeigt ein Ausführungsbeispiel einer Motor-Getriebe-Antriebseinheit mit der erfindungsgemäßen Endstellungserkennung jedoch ohne eine integrierte Notbetätigung. Gleiche bzw. äquivalente Teile tragen die gleichen Bezugszeichen wie in den vorhergehenden Figuren; gegenüber den in den vorhergehenden Figuren dargestellten Ausführungsbeispielen entfällt die Notwendigkeit einer axialen Trennbarkeit zwischen der Abtriebswelle 1 und der Antriebswelle 2; beide können daher einstückig ausgebildet sein. Das Getrieberad 3 ist kraft- und/oder formschlüssig mit der Antriebswelle 2 verbunden. Wie anhand der vorgenannten Ausführungsbeispiele erläutert, ist die Endstellungserkennung durch äußere Ankopplung an das Gehäuse der Motor-Getriebe-Antriebseinheit nachrüstbar, wobei der Gegenmitnehmer 11 wiederum in vorteilhafter und einfacher Weise taumelfrei zur Abtriebswelle 2 und zu dem daran angebrachten Mitnehmer 2.7 durch die Halterung 5.1 um eine fiktive Drehachse 11.1 parallel versetzt zur Drehachse 11.1 des Mitnehmers 2.7 geführt ist.

## Patentansprüche

1. Motor-Getriebe-Antriebseinheit für ein zwischen Endstellungen verstellbares Teil, insbesondere zur Hubverstellung eines Schiebedaches in einem Kraftfahrzeug, mit folgenden Merkmalen:
Ein Elektromotor steht in Antriebsverbindung zu einem Untersetzungsgetriebe mit zumindest einer Abtriebswelle (1) und einer Antriebswelle (2);
die Antriebswelle (2) steht zur Endstellungserkennung in synchroner Drehmitnahme mit einem zu ihr konzentrischen Mitnehmer (2.7);
der Mitnehmer (2.7) steht während einer Drehung jeweils in zeitweiser Einklink-Drehmitnahme mit einem um eine parallel zur Abtriebswelle (1) versetzten Drechachse (11.1) drehbaren und zu dieser konzentrischen Gegenmitnehmer (11);
die Drehmitnahme des Gegenmitnehmers (11) zwischen zwei Endstellungen beträgt weniger als 360°C.

2. Motor-Getriebe-Antriebseinheit nach dem vorhergehenden Anspruch mit dem Merkmal:
Der Mitnehmer (2.7) ist als ein, insbesondere einstückig angeformter, radial vorstehender Mitnahme-Nocken an der Antriebswelle (2) vorgesehen.

3. Motor-Getriebe-Antriebseinheit nach dem vorhergehenden Anspruch mit dem Merkmal:
Der Gegenmitnehmer (11) ist als innen verzahntes Außenrad ausgebildet, dessen Zähne (11.3;11.4 usw.) jeweils in aufeinanderfolgender Einklink-Einzelmitnahme mit dem Mitnahme-Nocken des Mitnehmers (2.7) stehen.

4. Motor-Getriebe-Antriebseinheit nach zumindest einem der vorhergehenden Ansprüche mit dem Merkmal:
Der Gegenmitnehmer (11) ist als Schaltrad mit einer an seinem Außenumfang vorgesehenen Schalterbetätigung, insbesondere einer Schaltkulisse (11.2), zur Betätigung zumindest eines Endschalters (12) ausgebildet.

5. Motor-Getriebe-Antriebseinheit nach zumindest einem der vorhergehenden Ansprüche mit den Merkmalen:
Der Gegenmitnehmer (11) bzw. ein von diesem betätigter Endschalter (12) sind von einer außen am Gehäuse der Motor-Getriebe-Antriebseinheit, insbesondere an einem ein abtriebsseitiges Getriebegehäuse (4) verschließenden Getriebegehäusedeckel (5), befestigten Halterung (5.1) aufgenommen;
die Antriebswelle (2) ragt mit einem den Mitnehmer (2.7) aufnehmenden Ende aus dem Gehäuse der Motor-Getriebe-Antriebseinheit, insbesondere dem Getriebegehäusedeckel (5), heraus.

6. Motor-Getriebe-Antriebseinheit nach dem vorhergehenden Anspruch mit dem Merkmal:
Die Halterung (5.1) ist als Kunststoffteil, insbesondere als Kunststoff-Spritzgußteil, ausgebildelt.

7. Motor-Getriebe-Antriebseinheit nach zumindest einem der vorhergehenden Ansprüche 5 bzw. 6 mit dem Merkmal:
Die Halterung (5.1) ist axial außen am Getriebegehäusedeckel (5), insbesondere zentrisch zu diesem und mit exzentrischer Drehaufnahme des Gegenmitnehmers (11), fixiert.

8. Motor-Getriebe-Antriebseinheit nach zumindest einem der vorhergehenden Ansprüche 5-7 mit dem Merkmal:
Der Gegenmitnehmer (11) ist bei seiner Drehmitnahme in der Halterung (5.1) durch diese, insbesondere mittels eines topfförmigen Randes (5.11) der Halterung (5.1), radial geführt und axial, insbesondere nach Art einer axialen Eindrück-Schnappverbindung gegenüber dem topfförmigen Rand, gesichert.

9. Motor-Getriebe-Antriebseinheit nach zumindest einem der vorhergehenden Ansprüche mit den Merkmalen:
Die Abtriebswelle (1) steht über eine axial verschiebbare erste Kupplungsverbindung (1.2;2.2) in dauernder Drehmitnahmeverbindung zu der Antriebswelle (2);
die Antriebswelle (2) steht über eine bei einer Notbetätigung durch ihre axiale Verschiebung lösbare zweite Kupplungsverbindung (2.1;6.1 bzw.2.1;3.1) in Drehmitnahmeverbindung mit einem Abtriebszahnrad (3) des Getriebes;
die zweite Kupplungsverbindung ist nach Art einer Kegelradverzahnung mit in schrägem Winkel zu der axialen Verschiebung verlaufenden Zahnflanken (2.1;3.1 bzw.2.1;6.1) ausgebildet.

10. Motor-Getriebe-Antriebseinheit nach dem vorhergehenden Anspruch mit dem Merkmal:
Das Abtriebszahnrad (3) des Getriebes steht über ein Zwischen-Kupplungsstück (6) in mittelbarer Dehmitnahmeverbindung (2.1;6.1) mit der Antriebswelle (1). (FIG 1-3)

11. Motor-Getriebe-Antriebseinheit nach zumindest einem der vorhergehenden Ansprüche 9 bzw. 10 mit dem Merkmal:
Die Zahnflanken (2.1;6.1) der lösbaren zweiten Kupplungsverbindung sind vorzugsweise unter einem Kegelwinkel von ca. 60° angeordnet. (FIG 1-3)

12. Motor-Getriebe-Antriebseinheit nach zumindest einem der vorhergehenden Ansprüche 9-11 mit dem Merkmal:
Das Abtriebszahnrad (3) des Getriebes steht, insbesondere unter Fortfall eines Zwischenkupplungsstücks (6) und entsprechender radialer Verbreiterung der Antriebswelle (2), in unmittelbarer Drehmitnahmeverbindung (2.1;3.1) mit der Antriebswelle (2). (FIG 4,5)

13. Motor-Getriebe-Antriebseinheit nach dem vorhergehenden Anspruch mit dem Merkmal:
Die Zahnflanken (2.1;3.1) der lösbaren zweiten Kupplungsverbindung sind vorzugsweise unter einem Kegelwinkel von ca. 150° angeordnet. (FIG 4,5)

14. Motor-Getriebe-Antriebseinheit nach zumindest einem der vorhergehenden Ansprüche 9-13 mit dem Merkmal:
Die axial verschiebbare erste Kupplungsverbindung (1.2;2.2) erfolgt formschlüssig, insbesondere in Form eines Vielkants, zwischen einem in eine Einstecköffnung (1.3) der Abtriebswelle (1) axial vorstehenden Kupplungsstift (2.4) der Antriebswelle (2) einerseits und einer diesen übergreifenden Kupplungs-Hülse (1.4) der Abtriebswelle (1) andererseits. (FIG 1-3)

15. Motor-Getriebe-Antriebseinheit nach zumindest einem der vorhergehenden Ansprüche 9-14 mit dem Merkmal:
Die axial verschiebbare erste Kupplungsverbindung (1.2;2.2) erfolgt formschlüssig, insbesondere in Form eines Vielkants, zwischen der Antriebswelle (2) einerseits und einer diese übergreifenden Kupplungs-Hülse (1.4) der Abtriebswelle (1) andererseits. (FIG 4,5)

16. Motor-Getriebe-Antriebseinheit nach zumindest einem der vorhergehenden Ansprüche 9-15 mit dem Merkmal:
Die Abtriebswelle (1) und die Antriebswelle (2) sind durch ein Federelement ((7 bzw.8) axial gegeneinander verspannt.

17. Motor-Getriebe-Antriebseinheit nach zumindest einem der vorhergehenden Ansprüche 9-16 mit dem Merkmal:
Die Antriebswelle (2) ist mit einer axialen Notbetatigungs-Einstecköffnung (2.3) mit axialem und tangentialem Formschluß gegenüber einem Notbetätigungswerkzeug, insbesondere einer Handkurbel (10), versehen. (FIG 1-3)

18. Motor-Getriebe-Antriebseinheit nach zumindest einem der vorhergehenden Ansprüche 9-17 mit den Merkmalen:
Die Antriebswelle (2) ist mit einer Durchstecköffnung (2.4) mit lediglich axialem Anschlag (2.6) gegenüber einem Notbetätigungswerkzeug, insbesondere eine Handkurbel (10), ausgebildet;
die Abtriebswelle (1) ist mit einer Einstecköffnung (1.3) zur Aufnahme eines freien Endes des Notbetätigungswerkzeuges, insbesondere einer Handkurbel (10), mit tangentialem Formschluß, gegenüber dem Notbetätigungswerkzeug, ausgebildet. (FIG 4,5)

19. Motor-Getriebe-Antriebseinheit nach zumindest einem der vorhergehenden Ansprüche 9-18 mit dem Merkmal:
Zumindest die Antriebswelle (2) bzw. die Abtriebswelle (1) sind als Metall-Teile ausgebildet. (FIG 1-3)

20. Motor-Getriebe-Antriebseinheit nach zumindest einem der vorhergehenden Ansprüche 9-19 mit dem Merkmal:
Zumindest das Abtriebszahnrad (3) und die Antriebswelle (2) sind als, insbesondere spritzgegossene, Kunststoff-Teile bzw. die Abtriebswelle (1) als Metall-Teil ausgebildet. (FIG 4,5) 21. Motor-Getriebe-Antriebseinheit nach zumindest einem der vorhergehenden Ansprüche mit den Merkmalen:
Der Mitnehmer (2.7) steht bei einer Notbetätigung in axialer Langsverschieblichkeit relativ zu dem Gegenmitnehmer (11);
der Mitnehmer (2.7) weist eine axiale Hubhöhe im Sinne einer Drehmitnahme des Gegenmitnehmers (11) sowohl im Normalbetrieb als auch im Notbetätigungsbetrieb auf.

## Claims

1. Motor/gear drive unit for a component adjustable between end positions, in particular for adjusting the travel of a sliding roof in a motor vehicle, having the following features:
an electric motor is drive-connected to a reduction gear having at least one output shaft (1) and one drive shaft (2);
for the detection of end positions, the drive shaft (2) is in synchronous rotational take-up engagement with a driver (2.7) concentric thereto;
during rotation, the driver (2.7) is in each case in temporary click-in rotational take-up engagement with a counter driver (11) which is rotatable about an axis of rotation (11.1) offset in parallel to the output shaft (1) and which is concentric to the said axis of rotation;
the rotational take-up of the counter driver (11) between two end positions is less than 360°.

2. Motor/gear drive unit according to the preceding claim, having the feature:
the driver (2.7) is provided as a radially projecting take-up boss on the drive shaft (2), the said take-up boss being, in particular, integrally formed in one piece.

3. Motor/gear drive unit according to the preceding claim, having the feature:
the counter driver (11) is designed as an internally toothed outer wheel, the teeth (11.3; 11.4, etc.) of which are in each case in successive individual click-in take-up engagement with the take-up boss of the driver (2.7).

4. Motor/gear drive unit according to at least one of the preceding claims, having the feature:
the counter driver (11) is designed as a switch wheel with switch actuation, in particular a switching slot (11.2), provided on its outer circumference, for the actuation of at least one limit switch (12).

5. Motor/gear drive unit according to at least one of the preceding claims, having the features:
the counter driver (11) and a limit switch (12) actuated by the latter are received by a mounting (5.1) fastened externally to the housing of the motor/gear drive unit, in particular to a gear case cover (5) which closes an output-side gear case (4);
the drive shaft (2) projects, with an end receiving the driver (2.7), out of the housing of the motor/gear drive unit, in particular out of the gear case cover (5).

6. Motor/gear drive unit according to the preceding claim, having the feature:
the mounting (5.1) is designed as a plastic component, in particular as a plastic injection moulding.

7. Motor/gear drive unit according to at least one of the preceding claims 5 and 6, having the feature:
the mounting (5.1) is axially fixed externally to the gear case cover (5), in particular centrically to the latter and with eccentric rotational reception of the counter driver (11).

8. Motor/gear drive unit according to at least one of the preceding claims 5-7, having the feature:
the counter driver (11), during its rotational take-up in the mounting (5.1), is guided radially by the latter, in particular by means of a can-like rim (5.11) of the mount (5.1), and is secured axially relative to the can-like rim, in particular in the manner of an axial press-in snap-connection.

9. Motor/gear drive unit according to at least one of the preceding claims, having the features:
the output shaft (1) is in permanent rotational take-up connection with the drive shaft (2) via an axially displaceable first coupling connection (1.2; 2.2);
the drive shaft (2) is in rotational take-up connection with an output gearwheel (3) of the gear via a second coupling connection (2.1; 6.1 or 2.1; 3.1) which is releasable as a result of its axial displacement during emergency actuation;
the second coupling connection is designed in the manner of a bevel-wheel toothing with tooth flanks (2.1; 3.1 or 2.1; 6.1) running at an oblique angle to the axial displacement.

10. Motor/gear drive unit according to the preceding claim, having the feature:
the output gearwheel (3) of the gear is in indirect rotational take-up connection (2.1; 6.1) with the drive shaft (2) via an intermediate coupling piece (6). (Figures 1-3)

11. Motor/gear drive unit according to at least one of the preceding claims 9 and 10, having the feature:
the tooth flanks (2.1; 6.1) of the releasable second coupling connection are preferably arranged at a taper angle of approximately 60°. (Figures 1-3)

12. Motor/gear drive unit according to at least one of the preceding claims 9 - 11, having the feature:
the output gearwheel (3) of the gear is in direct rotational take-up connection (2.1; 3.1) with the drive shaft (2), in particular when an intermediate coupling piece (6) is omitted and the drive shaft (2) is radially widened correspondingly. (Figures 4, 5)

13. Motor/gear drive unit according to the preceding claim, having the feature:
the tooth flanks (2.1; 3.1) of the releasable second coupling connection are preferably arranged at a taper angle of approximately 150°. (Figures 4, 5)

14. Motor/gear drive unit according to at least one of the preceding claims 9 - 13, having the feature:
the axially displaceable first coupling connection (1.2; 2.2) is made positively, in particular in the form of a polygon, between a coupling pin (2.4) of the drive shaft (2), the said coupling pin projecting axially into an insertion orifice (1.3) of the output shaft (1), on the one hand, and a coupling sleeve (1.4) of the output shaft (1), the said coupling sleeve engaging over the said coupling pin, on the other hand. (Figures 1 -3)

15. Motor/gear drive unit according to at least one of the preceding claims 9 - 14, having the feature:
the axially displaceable first coupling connection (1.2; 2.2) is made positively, in particular in the form of a polygon, between the drive shaft (2), on the one hand, and a coupling sleeve (1.4) of the output shaft (1), the said coupling sleeve engaging over the said drive shaft, on the other hand. (Figures 4, 5)

16. Motor/gear drive unit according to at least one of the preceding claims 9 - 15, having the feature:
the output shaft (1) and the drive shaft (2) are axially braced relative to one another by means of a spring element (7 and 8).

17. Motor/gear drive unit according to at least one of the preceding claims 9 - 16, having the feature:
the drive shaft (2) is provided with an axial emergency actuation insertion orifice (2.3) having axial and tangential positive connection with an emergency actuation tool, in particular a crankhandle (10). (Figures 1-3)

18. Motor/gear drive unit according to at least one of the preceding claims 9 - 17, having the features:
the drive shaft (2) is designed with a passage orifice (2.4) with only axial abutment (2.6) with an emergency actuation tool, in particular a crankhandle (10);
the output shaft (1) is designed with an insertion orifice (1.3) for receiving a free end of the emergency actuation tool, in particular a crankhandle (10), with tangential positive connection with the emergency actuation tool. (Figures 4, 5)

19. Motor/gear drive unit according to at least one of the preceding claims 9 - 18, having the feature:
at least the drive shaft (2) and the output shaft (1) are designed as metal components. (Figures 1 - 3)

20. Motor/gear drive unit according to at least one of the preceding claims 9 - 19, having the feature:
at least the output gearwheel (3) and the drive shaft (2) are designed as, in particular injection-moulded, plastic components and the output shaft (1) is designed as a metal component. (Figures 4, 5)

21. Motor/gear drive unit according to at least one of the preceding claims, having the features:
during emergency actuation, the driver (2.7) has axial longitudinal displaceability in relation to the counter driver (11);
the driver (2.7) has an axial travel with the effect of a rotational take-up of the counter driver (11) both during normal operation and during emergency actuation operation.

## Revendications

1. Unité d'entraînement à motoréducteur pour un élément pouvant être déplacé entre des positions extrêmes, notamment pour la course de déplacement d'un toit ouvrant dans un véhicule automobile, comprenant les caractéristiques suivantes :
un moteur électrique se trouve en liaison motrice avec une transmission réductrice par au moins un arbre (1) de sortie et un arbre (2) d'entraînement,
l'arbre (2) d'entraînement se trouve, pour la reconnaissance des positions extrêmes, en entraînement en rotation synchrone avec un entraîneur (2.7) qui lui est concentrique,
l'entraîneur (2.7) se trouve, pendant chaque rotation, en entraînement en rotation temporaire par encliquetage avec un entraîneur (11) complémentaire, qui est rotatif autour d'un axe (11.1) de rotation décalé parallèlement à l'arbre (1) de sortie et qui est concentrique à cet axe,
l'entraînement en rotation de l'entraîneur (11) complémentaire entre deux positions extrêmes est inférieur à 360°.

2. Unité d'entraînement à motoréducteur suivant la revendication précédente, comprenant la caractéristique suivante :
l'entraîneur (2.7) est prévu sous la forme d'un toc entraîneur, dépassant radialement de l'arbre (2) d'entraînement et notamment solidaire de ce dernier.

3. Unité d'entraînement à motoréducteur suivant la revendication précédente, comprenant la caractéristique suivante :
l'entraîneur (11) complémentaire est réalisé sous la forme d'une roue extérieure à denture intérieure, dont les dents (11.3, 11.4, etc.) se trouvent respectivement en entraînement individuel successif par encliquetage avec le toc entraîneur de l'entraîneur (2.7).

4. Unité d'entraînement à motoréducteur suivant au moins une des revendications précédentes, comprenant la caractéristique suivante :
l'entraîneur (11) complémentaire est réalisé sous la forme d'une roue de commutation dotée d'un actionnement de commutateur prévu sur sa circonférence extérieure, notamment d'une coulisse (11.2) de commutation, pour l'actionnement d'au moins un commutateur (12) de fin de course.

5. Unité d'entraînement à motoréducteur suivant au moins une des revendications précédentes, comprenant les caractéristiques suivantes :
l'entraîneur (11) complémentaire, et, le cas échéant, un commutateur (12) de fin de course actionné par ce dernier, sont reçus par un support (5.1) fixé extérieurement sur le carter de l'unité d'entraînement à motoréducteur, notamment sur un couvercle (5) de carter de transmission fermant un carter (4) de transmission situé du côté de sortie,
l'arbre (2) d'entraînement dépasse hors du carter de l'unité d'entraînement à motoréducteur, notamment du couvercle (5) de carter de transmission, par une extrémité recevant l'entraîneur (2.7).

6. Unité d'entraînement à motoréducteur suivant la revendication précédente, comprenant la caractéristique suivante :
le support (5.1) est réalisé sous forme de pièce en matière plastique, notamment de pièce en matière plastique moulée par injection.

7. Unité d'entraînement à motoréducteur suivant au moins une des revendications précédentes 5 ou 6, comprenant la caractéristique suivante :
le support (5.1) est fixé en position axiale extérieure sur le couvercle (5) de carter de transmission, notamment en étant centré par rapport à ce dernier et en recevant à rotation de façon excentrée l'entraîneur (11) complémentaire.

8. Unité d'entraînement à motoréducteur suivant au moins une des revendications précédentes 5 à 7, comprenant la caractéristique suivante :
l'entraîneur (11) complémentaire, lors de son entraînement en rotation dans le support (5.1), est guidé radialement par ce dernier, notamment au moyen d'un rebord (5.11) en forme de pot du support (5.1), et est assujetti axialement par rapport au rebord en forme de pot, notamment à la manière d'un assemblage à enclenchement par enfoncement axial.

9. Unité d'entraînement à motoréducteur suivant au moins une des revendications précédentes, comprenant les caractéristiques suivantes :
l'arbre (1) de sortie se trouve en liaison permanente d'entraînement en rotation avec l'arbre (2) d'entraînement au moyen d'une première (1.2, 2.2) liaison d'accouplement à translation axiale,
l'arbre (2) d'entraînement se trouve en liaison d'entraînement en rotation avec une roue (3) dentée de sortie de la transmission au moyen d'une deuxième (2.1, 6.1 ou 2.1, 3.1) liaison d'accouplement, qui peut être libérée par sa translation axiale lors d'un actionnement de secours,
la deuxième liaison d'accouplement est réalisée à la manière d'une denture de roue conique, dont les flancs (2.1, 3.1 ou 2.1, 6.1) de dents s'étendent en angle oblique par rapport à la translation axiale.

10. Unité d'entraînement à motoréducteur suivant la revendication précédente, comprenant la caractéristique suivante :
la roue (3) dentée de sortie de la transmission se trouve en liaison indirecte d'entraînement en rotation avec l'arbre (2) d'entraînement au moyen d'un élément (6) d'accouplement intermédiaire (figures 1 à 3).

11. Unité d'entraînement à motoréducteur suivant au moins une des revendications précédentes 9 ou 10, comprenant la caractéristique suivante :
les flancs (2.1, 6.1) de dents de la deuxième liaison d'accouplement libérable sont disposés de préférence sous un angle de cône d'environ 60° (figures 1 à 3).

12. Unité d'entraînement à motoréducteur suivant au moins une des revendications précédentes 9 à 11, comprenant la caractéristique suivante :
la roue (3) dentée de sortie de la transmission se trouve, notamment en supprimant l'élément (6) d'accouplement intermédiaire et avec un élargissement radial correspondant de l'arbre (2) d'entraînement, en liaison (2.1, 3.1) directe d'entraînement en rotation avec l'arbre (2) d'entraînement (figures 4, 5).

13. Unité d'entraînement à motoréducteur suivant la revendication précédente, comprenant la caractéristique suivante :
les flancs (2.1, 3.1) de dents de la deuxième liaison d'accouplement libérable sont disposés de préférence sous un angle de cône d'environ 150° (figures 4, 5).

14. Unité d'entraînement à motoréducteur suivant au moins une des revendications précédentes 9 à 13, comprenant la caractéristique suivante :
la première (1.2, 2.2) liaison d'accouplement à translation axiale s'effectue par engagement positif, notamment polygonal, entre, d'une part, une broche (2.5) d'accouplement de l'arbre (2) d'entraînement qui dépasse axialement dans une ouverture (1.3) d'emboîtement de l'arbre (1) de sortie, et, d'autre part, un manchon (1.4) d'accouplement de l'arbre (1) de sortie qui vient en prise sur cette broche (figures 1 à 3).

15. Unité d'entraînement à motoréducteur suivant au moins une des revendications précédentes 9 à 14, comprenant la caractéristique suivante :
la première (1.2, 2.2) liaison d'accouplement à translation axiale s'effectue par engagement positif, notamment polygonal, entre, d'une part, l'arbre (2) d'entraînement, et, d'autre part, un manchon (1.4) d'accouplement de l'arbre (1) de sortie qui vient en prise sur l'arbre (2) d'entraînement (figures 4, 5).

16. Unité d'entraînement à motoréducteur suivant au moins une des revendications précédentes 9 à 15, comprenant la caractéristique suivante :
l'arbre (1) de sortie et l'arbre (2) d'entraînement sont bloqués axialement l'un par rapport à l'autre par un élément (7 ou 8) de ressort.

17. Unité d'entraînement à motoréducteur suivant au moins une des revendications précédentes 9 à 16, comprenant la caractéristique suivante :
l'arbre (2) d'entraînement est pourvu d'une ouverture (2.3) axiale d'emboîtement pour actionnement de secours, à engagement positif axial et tangentiel vis-à-vis d'un outil d'actionnement de secours, notamment une manivelle (10) (figures 1 à 3).

18. Unité d'entraînement à motoréducteur suivant au moins une des revendications précédentes 9 à 17, comprenant les caractéristiques suivantes :
l'arbre (2) d'entraînement est pourvu d'une ouverture (2.4) d'enfilage traversante, avec seulement une butée (2.6) axiale pour un outil d'actionnement de secours, notamment une manivelle (10),
l'arbre (1) de sortie est pourvu d'une ouverture (1.3) d'emboîtement pour recevoir une extrémité libre d'un outil d'actionnement de secours, notamment d'une manivelle (10), avec engagement positif tangentiel vis-à-vis de l'outil d'actionnement de secours (figures 4, 5).

19. Unité d'entraînement à motoréducteur suivant au moins une des revendications précédentes 9 à 18, comprenant la caractéristique suivante :
au moins l'arbre (2) d'entraînement, et, le cas échéant, l'arbre (1) de sortie, sont réalisés sous la forme de pièces métalliques (figures 1 à 3).

20. Unité d'entraînement à motoréducteur suivant au moins une des revendications précédentes 9 à 19, comprenant la caractéristique suivante :
au moins la roue (3) dentée de sortie et l'arbre (2) d'entraînement sont réalisés sous la forme de pièces en matière plastique, notamment moulées par injection, et, le cas échéant, l'arbre (1) de sortie est réalisé sous forme de pièce métallique (figures 4, 5).

21. Unité d'entraînement à motoréducteur suivant au moins une des revendications précédentes, comprenant les caractéristiques suivantes :
l'entraîneur (2.7) est, lors d'un actionnement de secours, à translation longitudinale axiale relative par rapport à l'entraîneur (11) complémentaire,
l'entraîneur (2.7) possède une longueur de course axiale qui lui permet d'entraîner en rotation l'entraîneur (11) complémentaire tant en service normal qu'en service d'actionnement de secours.
